(19) Europäisches Patentamt
European Patent Office
Office européen des brevets

(11) **EP 4 253 095 B1**

(12) **EUROPEAN PATENT SPECIFICATION**

(45) Date of publication and mention
of the grant of the patent:
**29.01.2025 Bulletin 2025/05**

(21) Application number: **23158458.2**

(22) Date of filing: **24.02.2023**

(51) International Patent Classification (IPC):
**B60C 15/02** (2006.01)

(52) Cooperative Patent Classification (CPC):
**B60C 15/02; B60C 2200/10**

(54) **MOTORCYCLE TIRE**

MOTORRADREIFEN

PNEU DE MOTOCYCLETTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.03.2022 JP 2022054772**

(43) Date of publication of application:
**04.10.2023 Bulletin 2023/40**

(73) Proprietor: **Sumitomo Rubber Industries, Ltd.
Kobe-shi, Hyogo 651-0072 (JP)**

(72) Inventor: **TOCHIKI, Yuki
Kobe-shi,, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**JP-A- H1 191 321     JP-B2- 3 192 026**

**Description**

## CROSS-REFERENCE TO RELATED APPLICATIONS

This application claims priority on Japanese Patent Application No. 2022-54772 filed on March 30, 2022.

## TECHNICAL FIELD

The present invention relates to motorcycle tires.

## BACKGROUND ART

A tire is fitted onto a rim, for example, the interior of the tire is filled with air, and the tire is used. The tire includes a carcass extending on and between a pair of beads. The tire is expanded by being filled with air. Accordingly, constant tension is generated in the carcass. Such tires are known not only for two-wheeled vehicles such as motorcycles, but also for four-wheeled vehicles such as passenger cars, see JP 3192026 B2, or for vehicles with even more wheels such as trucks, see JP H11 91321 A.

A pneumatic tire for which workability of rim fitting is improved, while maintaining good resistance to rim detachment, by adjusting the ratio dw/D of an inner diameter dw of a core to a heel diameter D of a rim specified in an official standard and the ratio dt/D of a heel diameter dt of a bead portion to the heel diameter D of the rim, has been proposed (for example, PATENT LITERATURE 1 below).

## CITATION LIST

[PATENT LITERATURE]

PATENT LITERATURE 1: Japanese Patent No. 4926314

## SUMMARY OF THE INVENTION

[TECHNICAL PROBLEM]

When importance is placed on resistance to rim detachment and workability of rim fitting as in the above-described tire disclosed in PATENT LITERATURE 1, there is a concern that the tightening force of each bead is reduced. If the tightening force of each bead is low, when a load acts on the tire, the bead moves relative to the rim. Such a tire has a poor stiffness feeling.

When the tightening force of each bead is increased, the stiffness feeling is improved. The tension of the carcass is increased, and thus the stiffness of each side portion of the tire is also increased. When the stiffness of each side portion is higher, the bending amount thereof becomes lower, so that the ground-contact feeling of the tire is deteriorated. A contour of the tread surface of a motorcycle tire is formed with a smaller radius of curvature than that of a tire for a four-wheeled vehicle such as a passenger car or a kart, and thus the tread surface comes into local contact with a road surface. In the case of a motorcycle tire, the sensitivity regarding ground-contact feeling is high, and it is difficult to enhance the stiffness feeling while maintaining the ground-contact feeling.

The present invention has been made in view of such circumstances. An object of the present invention is to provide a motorcycle tire that can enhance a stiffness feeling while suppressing deterioration of a ground-contact feeling.

[SOLUTION TO PROBLEM]

A motorcycle tire according to an aspect of the present invention includes a bead portion to be fitted to a rim, and the bead portion includes a core extending in a circumferential direction. An outer surface of the bead portion includes a seat surface which includes a toe of the tire and comes into contact with a seat of the rim, a flange surface which comes into contact with a flange of the rim, and a heel surface which is located between the seat surface and the flange surface. The rim is a normal rim. In a meridian cross-section of the tire, a point of intersection of a seat extension line, of the seat surface, extended outward from an axially outer end of the seat surface and a flange reference line extending radially inward from a radially inner end of the flange surface is a heel reference point, and a position, on the seat surface, at which a distance in an axial direction from the flange reference line is 7 mm is a seat reference point.

An inner diameter dw of the core, a rim diameter D of the rim, an inner diameter dA of the tire at the heel reference point, and an inner diameter dB of the tire at the seat reference point satisfy the following formulas,

$$dw/D \geq 1.0041,$$

$$dA/D \leq 0.9966,$$

and

$$dA - 1.72 \leq dB \leq dA - 0.73,$$

wherein units for dw, D, dA, and dB are mm.

Preferably, in the motorcycle tire, a distance H in the axial direction from the heel reference point to the toe exceeds 7 mm, and the distance H in the axial direction, an inner diameter dC of the tire at the toe, and the inner diameter dB of the tire satisfy the following formula,

$$dB - 1.16(H - 7) \leq dC \leq dB - 0.61(H - 7),$$

wherein units for dB, H, and dC are mm.

Preferably, in the motorcycle tire, the rim diameter D of the rim and the inner diameter dA of the tire at the heel reference point satisfy the following formula,

$$0.9884 \leq dA/D \leq 0.9931.$$

More preferably, in the motorcycle tire, the inner diameter dw of the core and the rim diameter D of the rim satisfy the following formula,

$$1.0064 \leq dw/D \leq 1.0111.$$

Preferably, in the motorcycle tire, in the meridian cross-section of the tire, a contour line of the heel surface is represented by an arc. The arc has a radius of not less than 2.5 mm and not greater than 7.5 mm.

Preferably, in the motorcycle tire, the distance H in the axial direction from the heel reference point to the toe is not less than 10.0 mm and not greater than 13.5 mm.

Preferably, in the motorcycle tire, the bead portion further includes a chafer which comes into contact with the seat and the flange of the rim. The chafer is composed of a canvas.

[ADVANTAGEOUS EFFECTS OF THE INVENTION]

According to the present invention, a motorcycle tire that can enhance a stiffness feeling while suppressing deterioration of a ground-contact feeling, is obtained.

**BRIEF DESCRIPTION OF DRAWINGS**

FIG. 1 is a cross-sectional view showing a part of a tire according to an embodiment of the present invention.
FIG. 2 is a cross-sectional view illustrating a rim.
FIG. 3 is a cross-sectional view illustrating a contour of a bead portion.

**DETAILED DESCRIPTION**

The following will describe in detail the present invention based on preferred embodiments with appropriate reference to the drawings.

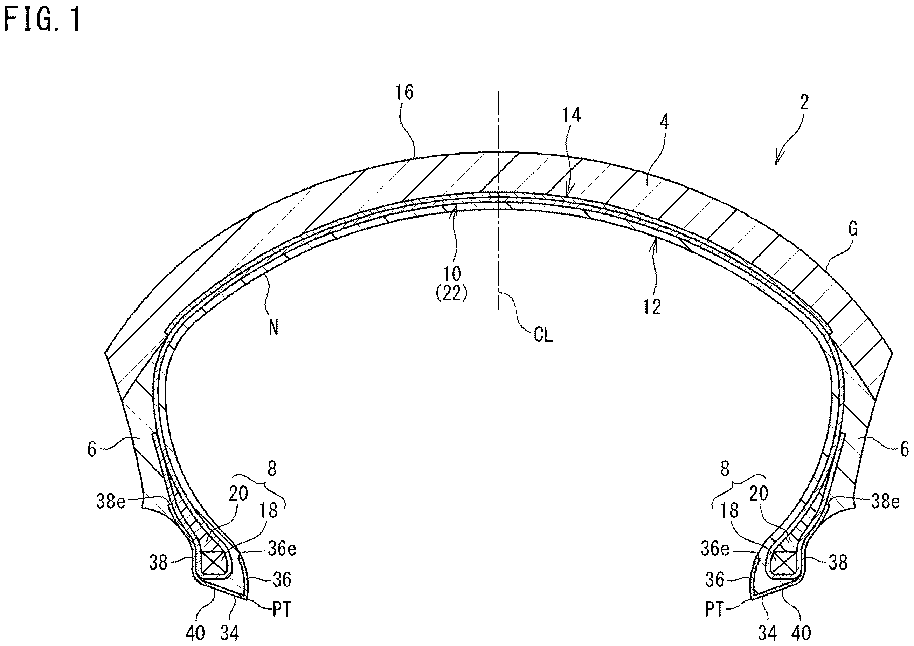

FIG. 1 shows a part of a tire 2 according to an embodiment of the present invention. The tire 2 is a motorcycle tire. The tire 2 is a rear tire which is attached to the rear wheel of a motorcycle.

FIG. 1 shows a part of a cross-section (hereinafter, referred to as a meridian cross-section) of the tire 2 along a plane including the rotation axis of the tire 2. In FIG. 1, the rightleft direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

The tire 2 includes a tread 4, a pair of sidewalls 6, a pair of beads 8, a carcass 10, an inner liner 12, and a reinforcing layer 14 as components thereof.

The tread 4 includes a tread surface 16 which comes into contact with a road surface. The tread surface 16 forms a part of an outer surface G of the tire 2. Each sidewall 6 is connected to the tread 4. Each bead 8 is located radially inward of the sidewall 6. The carcass 10 extends on and between the pair of beads 8. The inner liner 12 is located inward of the carcass 10. The inner liner 12 forms an inner surface N of the tire 2. The reinforcing layer 14 is stacked on the carcass 10 on the radially inner side of the tread 4.

Each bead 8 includes a core 18 and an apex 20. The core 18 extends in the circumferential direction. The core 18 includes a metal wire which is not shown. In the tire 2, a cross-sectional shape of the core 18 is a rectangular shape. The cross-sectional shape may be a circular shape or a hexagonal shape.

The carcass 10 includes a carcass ply 22. The carcass ply 22 is turned up around each core 18 from the inner side toward the outer side in the axial direction. The carcass ply 22 includes a large number of cords aligned with each other, which are not shown.

The reinforcing layer 14 includes a helically wound cord. The reinforcing layer 14 is also referred to as a band. The reinforcing layer 14 may be a belt including a large number of cords aligned with each other.

In FIG. 1, a position indicated by each reference sign PT is a toe of the tire 2. The toe PT is the boundary between the outer surface G and the inner surface N of the tire 2.

Although not described in detail, the tire 2 is obtained by pressurizing and heating an uncrosslinked tire 2 in a cavity formed between a mold and a bladder (or rigid core).

The outer surface G of the tire 2 is shaped by the mold (not shown). The inner surface N of the tire 2 is shaped by the bladder.

The tire 2 includes a tread portion TT, a pair of bead portions TB, and a pair of sidewall portions TS as portions thereof. The tread portion TT is a portion of the tire 2 that comes into contact with a road surface, and includes, for example, the tread 4. Each bead portion TB is a portion of the tire 2 that is fitted to a rim R described later, and includes, for example, the bead 8. Each sidewall portion TS is a portion of the tire 2 that extends between the tread portion TT and the bead portion TB, and includes, for example, the sidewall 6. In the present invention, a side portion is a portion composed of the sidewall portion TS and the bead portion TB.

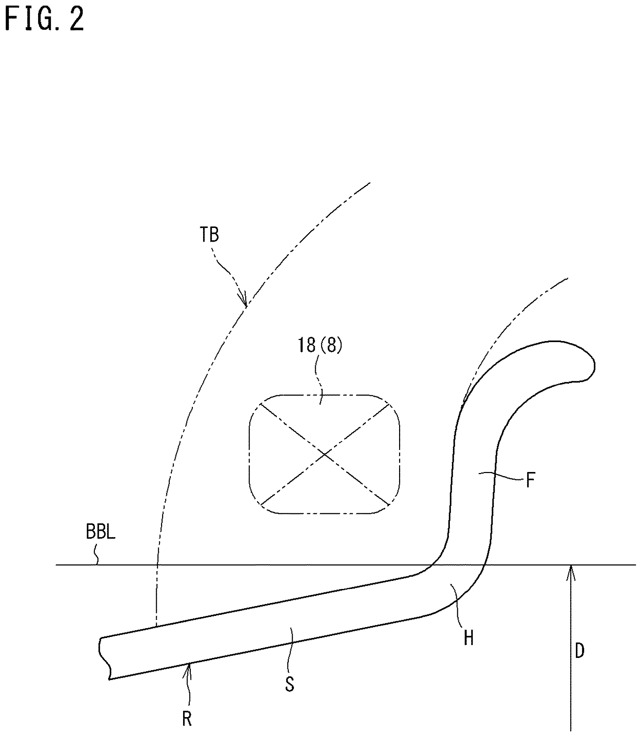

FIG. 2 shows a part of the rim R. Each bead portion TB is fitted to the rim R. Accordingly, the tire 2 is fitted on the rim R. The interior of the tire 2 is, for example, filled with air to adjust the internal pressure of the tire 2. The tire 2 fitted on the rim R is also referred to as a tire-rim assembly. The tire-rim assembly includes the rim R and the tire 2 fitted on the rim R.

The rim R is a normal rim. The normal rim means a rim specified in a standard on which the tire is based. The "standard rim" in the JATMA standard, the "Design Rim" in the TRA standard, and the "Measuring Rim" in the ETRTO standard are normal rims.

The rim R includes seats S and flanges F. Each seat S supports the bead portion TB from the radially inner side. Each flange F supports the bead portion TB from the axially outer side. A boundary portion between the seat S and the flange F is also referred to as a heel H. In FIG. 2, a solid line BBL extending in the axial direction is a bead base line. The bead base line BBL is a line that defines the rim diameter of (see JATMA or the like) of the rim R.

In FIG. 2, a length indicated by reference sign D is the rim diameter.

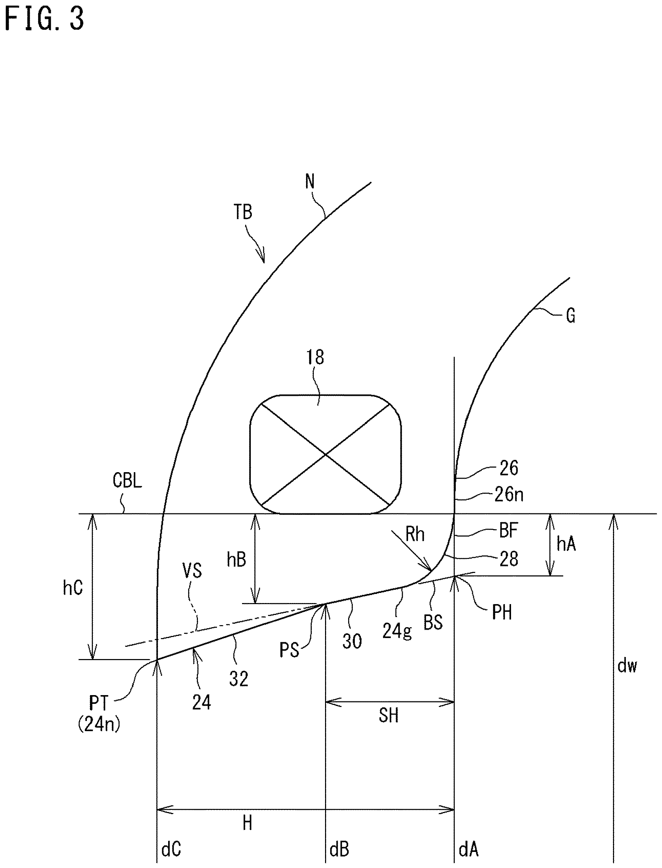

FIG. 3 shows a part of the meridian cross-section of the tire 2 shown in FIG. 1. FIG. 3 shows a cross-section of the bead portion TB.

The configuration regarding the outer surface of the bead portion TB described below is also applied to the outer surface of each bead portion of a front tire (not shown) which is attached to the front wheel of a motorcycle.

The bead portion TB includes the core 18 of the bead 8. In the tire 2, the core 18 forms a ring. In FIG. 3, an arrow indicated by reference sign dw represents the inner diameter of the core 18. A solid line CBL extending in the axial direction is a line (hereinafter, referred to as a core reference line) that defines the inner diameter dw of the core 18.

The outer surface of the bead portion TB forms a part of the outer surface G of the tire 2. The outer surface of the bead portion TB includes a seat surface 24, a flange surface 26, and a heel surface 28.

The seat surface 24 comes into contact with the seat S of the rim R. An axially outer end 24g of the seat surface 24 is also the boundary between the seat surface 24 and the heel surface 28. An axially inner end 24n of the seat surface 24 is the toe PT of the tire 2. The seat surface 24 includes the toe PT of the tire 2.

The flange surface 26 comes into contact with the flange F of the rim R. A radially inner end 26n of the flange surface 26 is the boundary between the flange surface 26 and the heel surface 28.

The heel surface 28 is located between the seat surface 24 and the flange surface 26. In the meridian cross-section, the contour line of the heel surface 28 is represented by an arc. In FIG. 3, an arrow indicated by reference sign Rh represents the radius of the arc representing the contour line of the heel surface 28.

In FIG. 3, a solid line indicated by reference sign BS is a seat extension line, of the seat surface 24, that extends outward from the axially outer end 24g of the seat surface 24. The seat extension line BS is tangent to the contour line of the seat surface 24 at the axially outer end 24g. The seat extension line BS is also tangent to the contour line of the heel surface 28 at the axially outer end 24g.

In FIG. 3, a solid line indicated by reference sign BF is a flange reference line that extends radially inward from the radially inner end 26n of the flange surface 26. In the tire 2, the flange reference line BF is tangent to the contour line of the flange surface 26 at the radially inner end 26n. The flange reference line BF is also tangent to the contour line of the heel surface 28 at the radially inner end 26n.

In FIG. 3, reference sign PH indicates the point of intersection of the seat extension line BS and the flange reference line BF. In the present invention, the point of intersection PH is a heel reference point.

In FIG. 3, an arrow indicated by reference sign dA represents the inner diameter of the tire 2 at the heel reference point PH. The inner diameter dA is represented by the following formula using the inner diameter dw of the core 18 and a distance hA in the radial direction from the core reference line CBL to the heel reference point PH.

$$dA = dw - 2 \times hA$$

In FIG. 3, a position indicated by reference sign PS is a position on the seat surface 24. A length indicated by a double-headed arrow SH is the distance in the axial direction from the flange reference line BF to the position PS. In the present invention, the distance SH in the axial direction is 7 mm. Therefore, the position PS is the position, on the seat surface 24, at which the distance SH in the axial direction from the flange reference line BF is 7 mm. In the present invention, the position PS is a seat reference point. In the tire 2, the seat reference point PS is located radially inward of the core 18.

In FIG. 3, an arrow indicated by reference sign dB represents the inner diameter of the tire 2 at the seat reference point PS. The inner diameter dB is represented by the following formula using the inner diameter dw of the core 18 and a distance hB in the radial direction from the core reference line CBL to the seat reference point PS.

$$dB = dw - 2 \times hB$$

In FIG. 3, a length indicated by a double-headed arrow H is the distance in the axial direction from the heel reference point PH to the toe PT. In the tire 2, the distance H in the axial direction exceeds 7 mm.

In FIG. 3, an arrow indicated by reference sign dC represents the inner diameter of the tire 2 at the toe PT. The inner diameter dC is represented by the following formula using the inner diameter dw of the core 18 and a distance hC in the radial direction from the core reference line CBL to the toe PT.

$$dC = dw - 2 \times hC$$

The present inventor has conducted thorough studies in order to enhance the stiffness feeling of a tire while suppressing deterioration of the ground-contact feeling of the tire, and as a result, the present inventor has found that it is important to increase the inner diameter dw of the core 18 and decrease the inner diameter dA of the tire 2 at the heel reference point PH, specifically, it is important that the inner diameter dw of the core 18, the rim diameter D of the rim R, and the inner diameter dA of the tire 2 at the heel reference point PH satisfy the following formulas.

$$dw/D \geq 1.0041$$

$$dA/D \leq 0.9966$$

The units for dw, D, and dA are mm.

Accordingly, the tire 2 allows the tightening force of each bead 8 to be increased while appropriately maintaining tension generated in the carcass 10. With the tire 2, the stiffness feeling is enhanced while deterioration of the ground-contact feeling is suppressed.

By increasing the inner diameter dw of the core 18 and decreasing the inner diameter dA of the tire 2 at the heel reference point PH, the stiffness feeling can be enhanced while deterioration of the ground-contact feeling is suppressed, but there is a concern that a fitting pressure is increased and rim fittability is deteriorated.

In this regard, the present inventor has conducted thorough studies focusing on the contact pressure with the rim R at a portion on the inner side of the core 18 of the bead 8, and as a result, the present inventor has found that, in order to decrease the contact pressure with the rim R, it is important that the inner diameter dA of the tire 2 at the heel reference point PH and the inner diameter dB of the tire 2 at the seat reference point PS satisfy the following formula.

$$dA - 1.72 \leq dB \leq dA - 0.73$$

The units for dA and dB are mm.

Accordingly, even when the inner diameter dw of the core 18 is increased and the inner diameter dA of the tire 2 at the heel reference point PH is decreased, the tire 2 allows the contact pressure with the rim R at the portion on the inner side of the core 18 to be decreased. As a result, in the tire 2, an increase in the fitting pressure is suppressed, and good rim fittability is maintained.

The reason for this is that: in the case of dB < dA - 1.72, the contact pressure with the rim R is increased, and an increase in the fitting pressure cannot be suppressed, so that there is a drawback that the rim fittability is deteriorated; and in the case of dB > dA - 0.73, the fitting pressure is decreased, but the contact pressure with the rim R is decreased and it becomes easier for the bead portion TB to move relative to the rim R.

In the tire 2, the distance H in the axial direction from the heel reference point PH to the toe PT, the inner diameter dC of the tire 2 at the toe PT, and the above-described inner diameter dB of the tire 2 preferably satisfy the following formula.

$$\mathrm{dB} - 1.16(\mathrm{H} - 7) \leq \mathrm{dC} \leq \mathrm{dB} - 0.61(\mathrm{H} - 7)$$

The units for dB, H, and dC are mm.

Accordingly, the contact pressure with the rim R at the toe PT of the tire 2 is increased. With the tire 2, the adhesion to the rim R is increased, and the stiffness feeling is further improved.

The reason for this is that: in the case of dC < dB - 1.16(H - 7), the contact pressure with the rim R is excessively increased, and an increase in the fitting pressure cannot be suppressed, so that there is a drawback that the rim fittability is deteriorated; and in the case of dC > dB - 0.61(H - 7), the fitting pressure is decreased, but the contact pressure with the rim R is decreased and it becomes easier for the bead portion TB to move relative to the rim R.

In the tire 2, from the viewpoint of further enhancing the stiffness feeling, the ratio (dA/D) of the inner diameter dA to the rim diameter D preferably satisfies the following formula.

$$0.9884 \leq \mathrm{dA/D} \leq 0.9931$$

In this case, there is a concern that the fitting pressure is increased and the rim fittability is deteriorated. Therefore, from the viewpoint of suppressing an increase in the fitting pressure and achieving improvement of the ground-contact feeling, the ratio (dw/D) of the inner diameter dw to the rim diameter D further preferably satisfies the following formula.

$$1.0064 \leq \mathrm{dw/D} \leq 1.0111$$

In the case of dA < 0.9884, the fitting pressure is excessively increased, so that the rim fittability is deteriorated. In the case of dw/D > 1.0111, when a load acts on the tire 2, the bead portion TB becomes slack and this tire cannot ensure a desired stiffness feeling.

As described above, in the meridian cross-section of the tire 2, the contour line of the heel surface 28 is represented by an arc. In the tire 2, the radius Rh of this arc is preferably not less than 2.5 mm and not greater than 7.5 mm.

When the radius Rh is set so as to be not less than 2.5 mm, an increase in the fitting pressure is effectively suppressed, so that good rim fittability is achieved. From this viewpoint, the radius Rh is more preferably not less than 3.5 mm.

When the radius Rh is set so as to be not greater than 7.5 mm, the contact pressure with the rim R at the heel surface 28 is appropriately maintained. The heel surface 28 can contribute to enhancing the stiffness feeling. From this viewpoint, the radius Rh is more preferably not greater than 6.5 mm.

In the tire 2, the distance H in the axial direction from the heel reference point PH to the toe PT is preferably not less than 10.0 mm and not greater than 13.5 mm.

When the distance H in the axial direction is set so as to be not less than 10.0 mm, the contact pressure with the rim R at the toe PT is increased, so that the adhesion to the rim R is improved. With the tire 2, the stiffness feeling is further improved. From this viewpoint, the distance H in the axial direction is more preferably not less than 10.5 mm.

When the distance H in the axial direction is set so as to be not greater than 13.5 mm, an increase in the fitting pressure is effectively suppressed, so that good rim fittability is achieved. From this viewpoint, the distance H in the axial direction is more preferably not greater than 12.0 mm.

The seat surface 24 of the tire 2 includes two surfaces consisting of a first seat surface 30 and a second seat surface 32 the boundary of which is the seat reference point PS.

The first seat surface 30 extends between the axially outer end 24g of the seat surface 24 and the seat reference point PS. The second seat surface 32 extends between the seat reference point PS and the toe PT.

In FIG. 3, an alternate long and two short dashes line indicated by reference sign VS is a virtual contour line, of the first seat surface 30, obtained by extending the contour line of the first seat surface 30 inward from the seat reference point PS. As shown in FIG. 3, in the meridian cross-section of the tire 2, the toe PT is located radially inward of the virtual contour line VS. Therefore, the contact pressure with the rim R at the toe PT is increased, so that the adhesion to the rim R is improved. With the tire 2, the stiffness feeling is further improved. From this viewpoint, preferably, the seat surface 24 includes the first seat surface 30 extending between the axially outer end 24g of the seat surface 24 and the seat reference point PS and the second seat surface 32 extending between the seat reference point PS and the toe PT, and in the meridian cross-section of the tire 2, the toe PT is located radially inward of the virtual contour line VS, of the first seat surface 30, obtained by extending the contour line of the first seat surface 30 inward from the seat reference point PS.

The tire 2 can further include a chafer 34 in each bead portion TB thereof. In other words, each bead portion TB can include a chafer 34. As shown in FIG. 1, each chafer 34 is located radially inward of the bead 8.

The chafer 34 includes an inner portion 36, an outer portion 38, and a bottom portion 40 located between the inner portion 36 and the outer portion 38. The inner portion 36 forms a part of the inner surface N of the tire 2. The outer portion 38 comes into contact with the flange F of the rim R. An outer end 38e of the outer portion 38 is located between the sidewall 6 and the carcass 10, and located radially outward of an outer end 36e of the inner portion 36. The bottom portion 40 comes into contact with the seat S. The bottom portion 40 extends between the inner portion 36 and the outer portion 38. The chafer 34 forms the seat surface 24, the flange surface 26, and the heel surface 28.

The chafer 34 is composed of a canvas. In other words, the chafer 34 includes a fabric. Specifically, the chafer 34 includes a fabric and a rubber with which the fabric is impregnated. An example of the material of the fabric is nylon.

As described above, in the tire 2, by increasing the inner diameter dw of the core 18 and decreasing the inner diameter dA of the tire 2 at the heel reference point PH, the stiffness feeling is enhanced while deterioration of the ground-contact feeling is suppressed. Preferably, by controlling the inner diameter dC of the tire 2 at the toe PT, the contact pressure with the rim R at the toe PT is increased, so that the stiffness feeling is further improved. In the tire 2, the volume of the rubber in a portion at the toe PT is larger than that in a conventional tire. Therefore, there is a concern that each bead portion TB is easily damaged when fitting the tire 2 onto the rim R.

However, as described above, each bead portion TB of the tire 2 includes the chafer 34 which comes into contact with the seat S and the flange F of the rim R, and the chafer 34 is composed of a canvas. The chafer 34 has excellent wear resistance. The chafer 34 suppresses wear due to contact with the rim R. Since the chafer 34 effectively reinforces the bead portion TB, occurrence of damage to the bead portion TB is suppressed. In the tire 2, the rim fittability is improved. From this viewpoint, preferably, the tire 2 includes the chafers 34 each of which comes into contact with the seat S and the flange F of the rim R, and each chafer 34 is composed of a canvas.

As described above, according to the present invention, a motorcycle tire that can enhance a stiffness feeling while suppressing deterioration of a ground-contact feeling, is obtained.

EXAMPLES

The following will describe the present invention in further detail by means of examples. In the following, the examples listed as "Comparative Examples" do not completely satisfy the formulas listed in claim 1 of the present invention, the examples listed as "Examples" completely satisfy the formulas listed in claim 1 of the present invention.

Motorcycle rear tires (tire designation = 200/60R17) having the basic structure shown in FIG. 1 were produced as test tires on the basis of specifications shown in Table 1 below.

The specifications of Comparative Example 1 correspond to the specifications of a conventional tire for which importance is placed on fitting pressure and rim fittability. In Example 14, no chafer is provided. This is indicated as "N" in the cell for "Chafer" in Table 4. "Y" indicates that chafers are provided.

A commercially available tire (tire designation = 120/70R17) was used as a front tire, and performance evaluation for ground-contact feeling and stiffness feeling was made for each test tire.

[Performance Evaluation]

Each test tire was fitted onto a normal rim and inflated with air to adjust the internal pressure of the tire to 290 kPa. This tire was attached to the rear wheel of a motorcycle equipped with a four-cycle engine having an engine displacement of 1000 cc. The internal pressure of the front tire was adjusted to 250 kPa.

This motorcycle was driven on a circuit course having an asphalt road surface, and performance evaluation for ground-contact feeling and stiffness feeling was made by the rider. The results are shown as indexes in Tables 1 to 4 below. A higher value indicates a better result.

[Overall Evaluation]

The total of the indexes obtained in the respective evaluations was calculated. The results are shown in the cells for "Total score" in Tables 1 to 4 below. A higher value indicates a better result.

[Table 1]

|  | Comparative Example 1 | Comparative Example 2 | Comparative Example 3 | Comparative Example 4 |
|---|---|---|---|---|
| dw/D | 1.0018 | 1.0018 | 1.0041 | 1.0041 |
| dA/D | 0.9977 | 0.9965 | 0.9977 | 0.9965 |
| dA [mm] | 432.8 | 432.3 | 432.8 | 432.3 |
| dB [mm] | 430.4 | 431.1 | 431.6 | 429.8 |
| dC [mm] | 428.6 | 429.3 | 429.8 | 428.1 |
| Rh [mm] | 2.5 | 2.5 | 2.5 | 2.5 |
| H [mm] | 10.0 | 10.0 | 10.0 | 10.0 |
| Chafer | Y | Y | Y | Y |
| Stiffness feeling | 10 | 13 | 5 | 13 |
| Ground-contact feeling | 10 | 10 | 13 | 13 |
| Total score | 20 | 23 | 18 | 26 |

[Table 2]

|  | Example 1 | Example 2 | Example 3 | Example 4 | Example 5 |
|---|---|---|---|---|---|
| dw/D | 1.0041 | 1.0041 | 1.0041 | 1.0041 | 1.0088 |
| dA/D | 0.9965 | 0.9965 | 0.9965 | 0.9965 | 0.9862 |
| dA [mm] | 432.3 | 432.3 | 432.3 | 432.3 | 427.8 |
| dB [mm] | 431.1 | 431.1 | 431.1 | 431.1 | 426.6 |
| dC [mm] | 428.6 | 426.9 | 429.3 | 429.6 | 424.1 |
| Rh [mm] | 2.5 | 2.5 | 2.5 | 2.5 | 2.5 |
| H [mm] | 10.0 | 10.0 | 10.0 | 10.0 | 10.0 |
| Chafer | Y | Y | Y | Y | Y |
| Stiffness feeling | 16 | 17 | 13 | 11 | 22 |
| Ground-contact feeling | 13 | 13 | 13 | 13 | 16 |
| Total score | 29 | 30 | 26 | 24 | 38 |

[Table 3]

|  | Example 6 | Example 7 | Example 8 | Example 9 | Example 10 |
|---|---|---|---|---|---|
| dw/D | 1.0041 | 1.012 | 1.0088 | 1.0088 | 1.0088 |
| dA/D | 0.9908 | 0.9908 | 0.9908 | 0.9908 | 0.9908 |
| dA [mm] | 429.8 | 429.8 | 429.8 | 429.8 | 429.8 |
| dB [mm] | 428.6 | 428.6 | 428.6 | 428.6 | 428.6 |
| dC [mm] | 426.1 | 426.1 | 426.1 | 426.1 | 426.1 |
| Rh [mm] | 2.5 | 2.5 | 1.5 | 2.5 | 8.0 |
| H [mm] | 10.0 | 10.0 | 10.0 | 10.0 | 10.0 |
| Chafer | Y | Y | Y | Y | Y |
| Stiffness feeling | 22 | 14 | 20 | 20 | 16 |
| Ground-contact feeling | 13 | 17 | 16 | 16 | 16 |

(continued)

|  | Example 6 | Example 7 | Example 8 | Example 9 | Example 10 |
|---|---|---|---|---|---|
| Total score | 35 | 31 | 36 | 36 | 32 |

[Table 4]

|  | Example 11 | Example 12 | Example 13 | Example 14 | Example 15 |
|---|---|---|---|---|---|
| dw/D | 1.0088 | 1.0088 | 1.0088 | 1.0088 | 1.0088 |
| dA/D | 0.9908 | 0.9908 | 0.9908 | 0.9908 | 0.9908 |
| dA [mm] | 429.8 | 429.8 | 429.8 | 429.8 | 429.8 |
| dB [mm] | 428.6 | 428.6 | 428.6 | 428.6 | 428.6 |
| dC [mm] | 426.1 | 426.1 | 425.5 | 425.5 | 426.1 |
| Rh [mm] | 3.5 | 3.5 | 3.5 | 3.5 | 3.5 |
| H [mm] | 9.0 | 10.0 | 12.0 | 12.0 | 15.0 |
| Chafer | Y | Y | Y | N | Y |
| Stiffness feeling | 18 | 20 | 22 | 22 | 24 |
| Ground-contact feeling | 16 | 16 | 16 | 16 | 13 |
| Total score | 34 | 36 | 38 | 38 | 37 |

As shown in Tables 1 to 4, it is confirmed that, in each Example, a ground-contact feeling and a stiffness feeling are improved. From the evaluation results, advantages of the present invention are clear.

INDUSTRIAL APPLICABILITY

The above-described technology capable of enhancing a stiffness feeling while suppressing deterioration of a ground-contact feeling can also be applied to various tires.

REFERENCE SIGNS LIST

2 tire
4 tread
6 sidewall
8 bead
10 carcass
12 inner liner
14 reinforcing layer
16 tread surface
18 core
24 seat surface
26 flange surface
28 heel surface
30 first seat surface
32 second seat surface
34 chafer
TT tread portion
TB bead portion
TS sidewall portion

**Claims**

1. A motorcycle tire (2) comprising a bead portion (TB) to be fitted to a rim (R), wherein

the bead portion (TB) includes a core (18) extending in a circumferential direction,
an outer surface of the bead portion (TB) includes a seat surface (24) which includes a toe (PT) of the tire (2) and comes into contact with a seat (S) of the rim (R), a flange surface (26) which comes into contact with a flange (F) of the rim (R), and a heel surface (28) which is located between the seat surface (24) and the flange surface (26),
the rim (R) is a normal rim (R),
in a meridian cross-section of the tire (2),

a point of intersection (PH) of a seat extension line (BS), of the seat surface (24), extended outward from an axially outer end (24g) of the seat surface (24) and a flange reference line (BF) extending radially inward from a radially inner end (26n) of the flange surface (26) is a heel reference point (PH), and
a position, on the seat surface (24), at which a distance in an axial direction from the flange reference line (BF) is 7 mm is a seat reference point (PS), and

an inner diameter dw of the core (18), a rim diameter D of the rim (R), an inner diameter dA of the tire (2) at the heel reference point (PH), and an inner diameter dB of the tire (2) at the seat reference point (PS) satisfy the following formulas,

$$dw/D \geq 1.0041,$$

$$dA/D \leq 0.9966,$$

and

$$dA - 1.72 \leq dB \leq dA - 0.73,$$

wherein units for dw, D, dA, and dB are mm.

2. The motorcycle tire (2) according to claim 1, wherein

a distance H in the axial direction from the heel reference point (PH) to the toe (PT) exceeds 7 mm, and
the distance H in the axial direction, an inner diameter dC of the tire (2) at the toe (PT), and the inner diameter dB of the tire (2) satisfy the following formula,

$$dB - 1.16(H - 7) \leq dC \leq dB - 0.61(H - 7),$$

wherein units for dB, H, and dC are mm.

3. The motorcycle tire (2) according to claim 1 or 2, wherein the rim diameter D of the rim (R) and the inner diameter dA of the tire (2) at the heel reference point (PH) satisfy the following formula,

$$0.9884 \leq dA/D \leq 0.9931.$$

4. The motorcycle tire (2) according to claim 3, wherein the inner diameter dw of the core (18) and the rim diameter D of the rim (R) satisfy the following formula,

$$1.0064 \leq dw/D \leq 1.0111.$$

5. The motorcycle tire (2) according to any one of claims 1 to 4, wherein

in the meridian cross-section of the tire (2), a contour line of the heel surface (28) is represented by an arc, and the arc has a radius (Rh) of not less than 2.5 mm and not greater than 7.5 mm.

6. The motorcycle tire (2) according to any one of claims 1 to 5, wherein a distance H in the axial direction from the heel reference point (PH) to the toe (PT) is not less than 10.0 mm and not greater than 13.5 mm.

7. The motorcycle tire (2) according to any one of claims 2 to 6, wherein

the bead portion (TB) further includes a chafer (34) which comes into contact with the seat (S) and the flange (F) of the rim (R), and
the chafer (34) is composed of a canvas.

**Patentansprüche**

1. Motorradreifen (2), umfassend einen Wulstabschnitt (TB), der an einer Felge (R) anzubringen ist, wobei

der Wulstabschnitt (TB) einen Kern (18) aufweist, der sich in einer Umfangsrichtung erstreckt,
eine Außenfläche des Wulstabschnitts (TB) eine Sitzfläche (24), die eine Zehe (PT) des Reifens (2) aufweist und mit einem Sitz (S) der Felge (R) in Kontakt kommt, eine Hornfläche (26), die mit einem Horn (F) der Felge (R) in Kontakt kommt, und eine Fersenfläche (28) aufweist, die zwischen der Sitzfläche (24) und der Hornfläche (26) angeordnet ist,
die Felge (R) eine normale Felge (R) ist,
in einem Meridianquerschnitt des Reifens (2),

ein Schnittpunkt (PH) einer Sitzverlängerungslinie (BS) der Sitzfläche (24), die sich von einem axial äußeren Ende (24g) der Sitzfläche (24) nach außen erstreckt, und einer Hornreferenzlinie (BF), die sich von einem radial inneren Ende (26n) der Hornfläche (26) radial nach innen erstreckt, ein Fersenreferenzpunkt (PH) ist, und
eine Position auf der Sitzfläche (24), an der ein Abstand in einer axialen Richtung von der Hornreferenzlinie (BF) 7 mm beträgt, ein Sitzreferenzpunkt (PS) ist, und

ein Innendurchmesser dw des Kerns (18), ein Felgendurchmesser D der Felge (R), ein Innendurchmesser dA des Reifens (2) am Fersenreferenzpunkt (PH) und ein Innendurchmesser dB des Reifens (2) am Sitzreferenzpunkt (PS) die folgenden Formeln erfüllen,

$$dw/D \geq 1{,}0041,$$

$$dA/D \leq 0{,}9966,$$

und

$$dA - 1{,}72 \leq dB \leq dA - 0{,}73,$$

wobei Einheiten für dw, D, dA und dB mm sind.

2. Motorradreifen (2) nach Anspruch 1, wobei

ein Abstand H in der axialen Richtung vom Fersenreferenzpunkt (PH) zur Zehe (PT) 7 mm überschreitet, und der Abstand H in der axialen Richtung, ein Innendurchmesser dC des Reifens (2) an der Zehe (PT) und der Innendurchmesser dB des Reifens (2) die folgende Formel erfüllen,

$$dB - 1{,}16(H - 7) \leq dC \leq dB - 0{,}61(H - 7),$$

wobei Einheiten für dB, H und dC mm sind.

3. Motorradreifen (2) nach Anspruch 1 oder 2, wobei der Felgendurchmesser D der Felge (R) und der Innendurchmesser dA des Reifens (2) am Fersenreferenzpunkt (PH) die folgende Formel erfüllen,

$$0{,}9884 \leq dA/D \leq 0{,}9931.$$

**4.** Motorradreifen (2) nach Anspruch 3, wobei der Innendurchmesser dw des Kerns (18) und der Felgendurchmesser D der Felge (R) die folgende Formel erfüllen,

$$1{,}0064 \leq dw/D \leq 1{,}0111.$$

**5.** Motorradreifen (2) nach einem der Ansprüche 1 bis 4, wobei

im Meridianquerschnitt des Reifens (2) eine Konturlinie der Fersenfläche (28) durch einen Bogen dargestellt ist, und
der Bogen einen Radius (Rh) von nicht weniger als 2,5 mm und nicht mehr als 7,5 mm aufweist.

**6.** Motorradreifen (2) nach einem der Ansprüche 1 bis 5, wobei ein Abstand H in der axialen Richtung vom Fersenreferenzpunkt (PH) zur Zehe (PT) nicht weniger als 10,0 mm und nicht mehr als 13,5 mm beträgt.

**7.** Motorradreifen (2) nach einem der Ansprüche 2 bis 6, wobei

der Wulstabschnitt (TB) ferner ein Wulstband (34) aufweist, das mit dem Sitz (S) und dem Horn (F) der Felge (R) in Kontakt kommt, und
das Wulstband (34) aus einem Canvas besteht.

**Revendications**

**1.** Pneumatique pour motocyclette (2) comprenant une portion formant talon (TB) devant être montée sur une jante (R), dans lequel la portion formant talon (TB) inclut une âme (18) s'étendant dans une direction circonférentielle,

une surface extérieure de la portion formant talon (TB) inclut une surface d'assise (24) qui inclut une partie avant (PT) du pneumatique (2) et qui vient en contact avec une assise (S) de la jante (R), une surface de bride (26) qui vient en contact avec une bride (F) de la jante (R), et une surface arrière (28) qui est située entre la surface d'assise (24) et la surface de bride (26),
la jante (R) est une jante normale (R),
dans une section transversale méridienne du pneumatique (2),
un point d'intersection (PH) d'une ligne d'extension d'assise (BS) de la surface d'assise (24), s'étendant vers l'extérieur depuis une extrémité axialement extérieure (24g) de la surface d'assise (24), et d'une ligne de référence de bride (BF) s'étendant radialement vers l'intérieur depuis une extrémité radialement intérieure (26n) de la surface de bride (26) est un point de référence arrière (PH), et
une position, sur la surface d'assise (24), à laquelle une distance dans une direction axiale depuis la ligne de référence de bride (BF) est 7 mm est un point de référence d'assise (PS), et
un diamètre intérieur dw de l'âme (18), un diamètre de jante D de la jante (R), un diamètre intérieur dA du pneumatique (2) au niveau du point de référence arrière (PH), et un diamètre intérieur dB du pneumatique (2) niveau du point de référence d'assise (PS) satisfont aux formules suivantes,

$$dw/D \geq 1{,}0041,$$

$$dA/D \leq 0{,}9966,$$

et

$$dA - 1{,}72 \leq dB \leq dA - 0{,}73,$$

les unités pour dw, D, dA et dB étant mm.

**2.** Pneumatique pour motocyclette (2) selon la revendication 1, dans lequel une distance H dans la direction axiale depuis le point de référence arrière (PH) jusqu'à la partie avant (PT) dépasse 7 mm, et

la distance H dans la direction axiale, un diamètre intérieur dC du pneumatique (2) au niveau de la partie avant (PT), et le diamètre intérieur dB du pneumatique (2) satisfont à la formule suivante,

$$dB - 1,16(H - 7) \leq dC \leq dB - 0,61(H - 7).$$

les unités pour dB, H et dC étant mm.

3. Pneumatique pour motocyclette (2) selon la revendication 1 ou 2, dans lequel le diamètre de jante D de la jante (R) et le diamètre intérieur dA du pneumatique (2) au niveau du point de référence arrière (PH) satisfont à la formule suivante :

$$0,9884 \leq dA/D \leq 0,9931.$$

4. Pneumatique pour motocyclette (2) selon la revendication 3, dans lequel le diamètre intérieur dw de l'âme (18) et le diamètre de jante D de la jante (R) satisfont à la formule suivante :

$$1,0064 \leq dw/D \leq 1,0111.$$

5. Pneumatique pour motocyclette (2) selon l'une quelconque des revendications 1 à 4, dans lequel

dans la section transversale méridienne du pneumatique (2), une ligne de contour de la surface arrière (28) est représentée par un arc, et
l'arc a un rayon (Rh) qui n'est pas inférieur à 2,5 mm et qui n'est pas supérieur à 7,5 mm.

6. Pneumatique pour motocyclette (2) selon l'une quelconque des revendications 1 à 5, dans lequel une distance H dans la direction axiale depuis le point de référence arrière (PH) jusqu'à la partie avant (PT) n'est pas inférieure à 10,0 mm et n'est pas supérieure à 13,5 mm.

7. Pneumatique pour motocyclette (2) selon l'une quelconque des revendications 2 à 6, dans lequel

la portion formant talon (TB) inclut en outre une bandelette de talon (34) qui vient en contact avec l'assise (S) et la bride (F) de la jante (R), et
la bandelette de talon (34) est composée d'une toile.

FIG. 1

EP 4 253 095 B1

FIG. 2

# FIG. 3

**REFERENCES CITED IN THE DESCRIPTION**

**Patent documents cited in the description**

- JP 2022054772 A
- JP 3192026 B
- JP H1191321 A
- JP 4926314 B